Europäisches Patentamt

European Patent Office

Office européen des brevets

(11) Publication number: 0 424 046 A2

# EUROPEAN PATENT APPLICATION

(21) Application number: 90311221.7

(22) Date of filing: 12.10.90

(51) Int. Cl.5: H04L 12/56

(30) Priority: 16.10.89 GB 8923293

(43) Date of publication of application:
24.04.91 Bulletin 91/17

(84) Designated Contracting States:
DE ES FR GB IT

(71) Applicant: ROKE MANOR RESEARCH LIMITED
Roke Manor
Romsey, Hampshire, SO51 0ZN(GB)

(72) Inventor: Hulbert, Anthony Peter
6 Hanley Road
Shirley, Southampton, S01 5AN(GB)

(74) Representative: Lawrence, Brian Richard et al
GEC Patent Department GEC-Marconi
Research Centre West Hanningfield Road
Great Baddow
Chelmsford, Essex CM2 8HN(GB)

(54) Radio communication systems.

(57) A packet radio communication network comprises a plurality of packet radios which are adapted to communicate with one another, in which transmissions from each packet radio are made in time slots and each packet radio is adapted to receive transmissions made in each of the time slots. Each of the packet radios is allocated a particular time slot but is able to transmit in a plurality of the time slots by transmitting a request for such transmissions to other packet radios in its vicinity, the other packet radios transmitting back to the requesting packet radio whether the requested time slots are being used by it or by one of its neighbouring packet radios.

EP 0 424 046 A2

# RADIO COMMUNICATION SYSTEMS

This invention relates to radio communication systems and more particularly to so called packet radio communication systems.

A packet radio communication system or network typically consists of an array of equipments, each conveniently referred to as a packet radio, and each generally comprising a radio transceiver coupled to a microprocessor. The purpose of such a network is to achieve data communication between the packet radios by means of radio transmissions. The data for transmission is divided into relatively short collections of bits known as packets. Along with the user data required to be transmitted, the packets typically contain other information such as address codes for the source and destination of the message. Additionally other data will be routinely transmitted which is related to the overall management of the network. Finally error protection (correction and detection) coding is applied to the data to obtain a packet suitable for transmission. Such a network may permit long distance communication across the network through the operation of 'store-and-forward' relaying, wherein a packet radio receiving a packet may store it in its memory and at a later time transmit it from memory in order to direct it to its required destination equipment.

Generally, each of the packet radios operates autonomously, deciding for itself when transmissions should be made. The radio propagation medium is used as a broadcast channel so that any of the equipments which are in range of the packet radio transmitting at any given time may receive its message. This is achieved by making all of the packet radios within any particular network operate on a common radio communications channel.

The use of a common channel has the potential problem, however, that if two or more packet radios elect to transmit at or close to the same time, their signals could interfere with each other at some of the packet radios attempting reception.

Several approaches have been adopted to attempt to solve or at least mitigate this problem. Generically these are known as "Channel Access Protocols".

There are a number of channel access protocols currently in use, the simplest and most well known of which is the "ALOHA" protocol. In its most basic, pure Aloha, form this is very simple. Fundamentally, the protocol consists of making transmissions at random and accepting any message loss which arises through collisions of overlapped messages. Generally, other types of protocols are used to ensure the required reliability of message delivery. For example, the use of an acknowledgement protocol could be used. In this approach, the packet radio receiving the message would make a transmission to indicate back to the source that the message had been received. If the source failed to receive such an acknowledgement it would try again, and so on.

It is obvious that such an approach cannot be particularly efficient and that as the offered traffic is increased the proportion of messages which are lost through collisions will also increase. In fact for pure Aloha, the maximum throughput which can be achieved is only 18% of the available channel capacity. Pure Aloha suffers from a further problem, namely that of potential instability. As the offered traffic is increased, the throughput will also increase up to a maximum. Beyond this point the throughput will actually fall. If the operation of the acknowledgement protocol described briefly above is considered, if a message fails to be delivered then there will be no acknowledgement and the source of that message will try again and so on. However, increasing the attempt rate will increase the total amount of traffic offered to the network with the result that the throughput will fall still further. Ultimately, all equipments would be making the maximum possible number of transmissions, causing a considerable level of interference and very few messages would actually be passed. In order to avoid this it is necessary to ensure that the offered traffic is constrained to be lower than the maximum in order to keep the network in the region of stable operation. However, this is extremely difficult to achieve since the total traffic offered to the network is the sum of that offered by the individual equipments operating within range of one another. Since these equipments do not, in general, know how much traffic the others are generating, they cannot determine how much they may safely transmit. The only simple solution to the problem is to set the maximum traffic levels from each of the equipments to be so low that it is extremely unlikely that their sum in any locality will take the network operation into the unstable region. This now makes the Aloha protocol even more inefficient.

A variant on pure Aloha is "slotted Aloha". In this case, although fundamentally the time of message transmission is still random, it is now random in a discrete fashion. Time is divided into slots which are synchronised for all equipments in the network and which last the duration of a packet. Equipments are only allowed to begin a packet transmission at the start of a slot. This approach has the advantage that collisions are either completely overlapped or do not happen at all. The effect of this is that the throughput is effectively doubled since collisions happen only half as often. However the network is still fundamentally inefficient and the problems of potential instability are just as severe.

A more complex channel access protocol has been developed to overcome some of the problems associated with Aloha. This is known as Carrier Sense Multiple Access or CSMA. The principle is that equipments, again make transmissions at random but before transmitting, listen to the channel to determine whether any other equipment of the network is transmitting. If another transmission is already underway, then the new transmission is postponed. This approach can result in extremely high channel utilisations. However, the approach is vulnerable to collisions when two or more units begin transmission at times spaced within the vulnerable period of each other. The CSMA vulnerable period is a time consisting of several components, viz:- the receive to transmit switching time; the receiver detection time (i.e. the time taken for the receiver to detect the presence of a bona fide LAIRS signal); and the radio propagation delay between units.

Because the carrier sense mechanism breaks down or more units transmit simultaneously or almost simultaneously, it when two will not be possible to use time slotting for transmission scheduling. This would have serious implications for the use of frequency hopping where commonly it is desirable to synchronise all equipment to transmit on the same frequency at the same time. This problem could be partially alleviated by the use of multiple frequencies per message but this is not always convenient. In this case the CSMA vulnerable period would be at least equal to the reciprocal of the number of hops per message; e.g. for 4 hops per message the CSMA vulnerable period would be 25% (which is rather large).

A further problem with the use of CSMA is the carrier sense mechanism. It is important that deference is given only to transmissions from bone fide members of the packet radio network. In a military network it might be possible for an enemy to pretend to be part of the network and make short, low level, transmissions to prevent the network from operating. Avoiding this vulnerability adds considerable complexity to the packet radio system.

It should also be noted that the CSMA protocol is not completely impervious to the dangers of instability. When the offered traffic reaches very high levels it would be become possible for many equipments to attempt transmission around the vulnerable period. If this happens it becomes likely that a significant number of transmissions will take place within the vulnerable period. Ultimately a peak in throughput is reached above which network operation again beccmes unstable. This is not such a problem as with Aloha since the region of operation up to the point of instability shows a relatively small increase in throughput with offered traffic. Thus backing off the offered traffic by a suitable amount from the point of instability does not significantly reduced the available throughput. Nevertheless maintenance of stability remains an issue.

Another important problem with CSMA is known as the "Hidden Terminal" problem. Consider the case of three packet radios a, b & c, where equipment b is situated at the top of a hill whilst a and c are on opposite sides of the hill. Thus b can hear both a and c; but a and c cannot hear each other. Thus if a needs to communicate with c it will tend to use b as a relay. Now either a or c may initiate a transmission at any time. Neither will hear the other and yet if their transmissions are overlapped they will interfere with each other at b (which can hear both). Thus b, which could easily become a bottleneck for communications (since much traffic needs to be relayed through it) actually experiences the worst system self interference.

It is an object of the present invention to provide a packet radio communication system which makes use of an improved form of channel access protocol which enables, for example, the problems of collision to be alleviated.

According to the present invention there is provided a radio communication system comprising a plurality of radio transceivers adapted to communicate with one another, in which transmissions from each of said transceivers are made in time slots, and in which each of said transceivers is adapted to receive transmissions made in each of said time slots, each of said transceivers being able to transmit in a plurality of said time slots by transmitting a request for such transmissions to others of said transceivers in the vicinity thereof, said others of said transceivers transmitting back to said requesting transceivers whether said requested time slots are available or not available for such transmissions.

In carrying out the invention it may be arranged that said plurality of radio receivers are adapted to communicate with one another in time frames each of which comprise a plurality of said time slots, and each of said transceivers is adapted to receive transmissions made in each of the time slots in each said time frame, each of said transceivers being able to transmit in a plurality of time slots in each said time frame.

Advantageously, each of said transceivers may be allocated a particular one of said time slots, and it may be arranged that said others of said transceivers transmit back to said requesting transceiver whether said requested time slots are available or not available in dependence upon whether a said other transceiver or a transceiver in the vicinity thereof is using a requested time slot.

In a preferred arrangement each of said transceivers will be adapted to receive transmissions from others of said transceivers, and will be adapted to relay received transmissions to further transceivers of said plurality.

An exemplary embodiment of the invention will now be described.

The packet radio communication network to be described is based on a new channel access protocol which makes use of non- contending transmission slots Which are usable by all packet radios in the network. In the new channel access protocol, time is divided into fixed length frames of durations $t_f$. It is further subdivided into slots of duration ts. Thus there are n ($=t_f/t_s$) slots per frame. The slots are given reference values, si (i = 1 to n). Every packet radio is initially assigned a unique slot reference. Thus n must be designed to exceed the number of packet radios envisaged in the network by a comfortable margin.

Now all packet radios will be able to make one transmission of $t_s$ duration every $t_f$ seconds without collision. However, as this stands it is very inefficient since, in a large network of say 100 packet radios, no equipment could transmit for more than 1% of the time.

If a network is considered which consists of packet radios which have a restricted communications range, then a large number of relaying operations will be required in order to cover the area that the network extends over. A corollary of this is that since each packet radio is effective over a restricted geographical area, the possibility of self-interference occurring is also restricted. It thus follows that many of the time slots could be re-used across the network without interference occurring. Thus, in order to improve the efficiency of operation of the network it is arranged that each of the packet radios may acquire some additional time slots for transmission purposes. This is achieved in a non-interference fashion as follows:

All packet radios are arranged to be permanently receiving and can thus determine which of the neighbouring packet radios in their vicinity are transmitting and in which slots. When a packet radio wishes to acquire some new slots it will select randomly from those slots perceived to be clear and broadcast a message stating the required slot reference number. The neighbours of that packet radio will listen to this message. If any of the requested slots is already held by one of them, or one of its neighbours (to avoid the hidden terminal effect), it will send a message telling the requester not to use it. After a timeout period the requester will assign to itself any slots not contested.

An obvious question relates to the stability of such an algorithm, i.e. is there any danger that a packet radio will seize a disproportionate share of slots, leaving an inadequate number available for its neighbours? This is a danger but can be avoided, as will be seen later, by ensuring that equipments in any locality cannot seize more slots than can be taken without detriment to their neighbours.

It may happen that local interference will affect the ability of a packet radio to "hear" its neighbours. Thus it may select slots which are already being used by neighbours. If this happens the neighbours may attempt to signal to it that these slots are unavailable. However, the message will not succeed because of the interference. In this case the packet radio will acquire the new slots and use them, thereby causing interference to its neighbours. The solution to this problem will be for the neighbours to relinquish these slots and acquire new ones.

It may happen very occasionally that two packet radios will both, within one frame, make a request for the same slot. Because both request transmissions are made in non-contending slots, both should be heard by their neighbours. It then becomes the duty of the neighbours to warn both units of the potential conflict. Neighbours will transmit on their own slots a message to both packet radios stating that a conflict has arisen over that new slot. Because a large number of packet radios could source this message it is highly unlikely that the message will not be heard. Conversely the traffic associated with this message could be very large. Accordingly, the requesting packet radios would acknowledge receipt of the message to avoid continued transmissions.

For a variety of types of deployment it is possible to determine how may slots should be available to each of the packet radios with a uniform distribution. Provided none are permitted to request more than this number there will be no danger of 'slot hogging' in which greedy packet radios seize more than their share of slots making it impossible for others to obtain their requirement. It is quite practicable to make non uniform assignments of slots provided the implications for capacity have been assessed.

In some cases, where a significant proportion of slots is known to be required in a specific locality, it may be desirable to group the slots into sets to avoid inefficiencies arising due to random operation of the assignment algorithm.

A variation of the system described above would be to arrange for each of the packet radios to time scramble the slots in each frame in an identical fashion, performing a different scrambling operation in each frame. This would ensure a random appearance for the timing of the transmissions made by the network as viewed by an external receiver.

It is envisaged that the channel access protocol which has been described would preferably be implemented in computer software contained within each of the packet radios of the network.

## Claims

1. A radio communication system comprising a plurality of radio transceivers adapted to communicate with one another, in which transmission from each of said transceivers are made in time slots, and in which each of said transceivers is adapted to receive transmissions made in each of said time slots, each of said transceivers being able to transmit in a plurality of said time slots by transmitting a request for such transmissions to others of said transceivers in the vicinity thereof, said others of said transceivers transmitting back to said requesting transceiver whether said requested time slots are available or not available for such transmissions.

2. A system as claimed in claim 1, in which said plurality of radio receivers are adapted to communicate with one another in time frames each of which comprise a plurality of said time slots, and in which each of said transceivers is adapted to receive transmissions made in each of the time slots in each said time frame, each of said transceivers being able to transmit in a plurality of time slots in each said time frame.

3. A system as claimed in claim 1 or 2, in which each of said transceivers is allocated a particular one of said time slots.

4. A system a claimed in any preceding claim, in which said others of said transceivers transmit back to said requesting transceiver whether said requested time slots are available or not available in dependence upon whether a said other transceiver or a transceiver in the vicinity thereof is using a requested time slot.

5. A system as claimed in any preceding claim, in which each of said transceiver is adapted to receive transmissions from others of said transceivers, and is adapted to relay received transmissions to further transceivers of said plurality.